# EUROPEAN PATENT APPLICATION

(11) **EP 2 821 827 A1**
(43) Date of publication of application: **07.01.2015**
(21) Application number: 12870319.6
(22) Date of filing: 29.02.2012
(51) Int. Cl.: G02B 6/38, G02B 6/36

(54) **HIGH DENSITY OPTICAL FIBER CONNECTOR AND ASSEMBLY METHOD THEREOF**

(30) Priority: 27.02.2012 CN 201210045948
(71) Applicant: Sunsea Telecommunications Co., Ltd., Shenzhen, Guangdong 518038 (CN)
(72) Inventor: ZHONG, Zhiyun, Shenzhen Guangdong 518038 (CN); YANG, Guo, Shenzhen Guangdong 518038 (CN); WANG, Qiyue, Shenzhen Guangdong 518038 (CN)
(74) Representative: Grünecker, Kinkeldey, Stockmair & Schwanhäusser
(86) International application number: PCT/CN2012/071770
(87) International publication number: WO 2013/127073

(57) **Abstract**

A high density optical fiber connector and an assembly method thereof. The connector is used for being matched with an optical fiber adapter, and comprises a connector housing, a ceramic insert core (2), a spring (4) and a tail sleeve (8). The lateral width of the connector housing is 2.5-4.5 mm, the connector housing forms a cavity by buckling a front housing (1) and a rear housing (5) in an inserted manner, the tail sleeve (8) is connected with the tail part of the connector housing, a guide projection (101) and an elastic arm are arranged at the front end outside the housing in sequence from front to back, the fixed end (102) of the elastic arm faces to the tail end of the connector, the free end (103) of the elastic arm on which a stopping bump (104) is arranged faces to the insert end of the connector; and the tail end of the ceramic insert core (2) is fixed with a tail seat (3) of the ceramic insert core and passes through a hole at the front end of the connector housing, and the spring (4) is compressed between the tail seat (3) of the ceramic insert core and a thrust block (501) formed by the inner wall of the connector housing. The overall dimension of the connector is greatly reduced, and the installation density of the connector can be further enhanced greatly.

## Description

### Technical Field

The present disclosure relates to an optical fiber connecting device, and more particularly to an optical fiber connector suitable for high-density installation and an assembling method thereof.

### Background Technology

Optical fiber communication, which has grown into one of main pillars of modern communications, plays a critical role in the modern telecommunication network. With the development of network technologies, optical fibers are used increasingly widely as transmission media for high-speed broadband data communications. An optical fiber connector is a device serving for a detachable (removable) connection between optical fibers. Specifically, the optical fiber connector enables end surfaces of two optical fibers to precisely abut on each other so that the light energy outputted from a transmitting optical fiber can be maximally coupled to a receiving optical fiber while minimizing the impact caused to a system due to the intervention of the optical fiber connector into the optical link. Currently, common optical fiber connectors may be classified into, for example, a Ferrule Connector (FC) type, a Subscriber Connector (SC) type, a Straight Tip (ST) type, a Lucent Connector (LC) type, a D4 type, a DIN type, a Miniature Unit Coupling (MU) type and a Mechanical Transfer (MT) type, depending on the structure thereof.

The FC optical fiber connector, which was first developed by NTT from Japan, is externally strengthened by a metal sleeve and fastened by a turnbuckle.

The SC optical fiber connector, which has a cuboid casing, uses an inserting pin and a coupling sleeve of the same structures and dimensions as those in the FC optical fiber connector, and may be fastened by a pluggable bolt.

The ST optical fiber connector is different from the SC optical fiber connector in exposing its core, while the core of the SC optical fiber connector is concealed within the joint.

The LC optical fiber connector, which was studied and developed by the famous Bell Labs, employs a modular Registered Jack (RJ) latch mechanism that is easy for operations. The inserting pins and the sleeve of the LC optical fiber connector have a width of 1.25mm, which is half of that of the common SC or FC optical fiber connector, and the size of the corresponding interfacing end surface is 4.5mm × 4.5mm, thereby increasing the density of the optical fiber connectors installed in an optical fiber distributing frame. Currently, the LC optical fiber connector has become dominant in the area of single-mode Small Form Factor (SFF), and its application in the multi-mode area is also rapidly expanding.

The MU optical fiber connector is so far the smallest single-core optical fiber connector in the world, which was developed by NTT based on the most commonly used SC optical fiber connector. The MU optical fiber connector employs an aluminium pipe with a diameter of 1.25mm and a self-holding mechanism, and is advantageous for its suitability for high-density installation, but still requires an interfacing end surface with a size up to 6.5mm × 4.5mm.

With the large-scale progress of Fiber To The Home (FTTH), the optical fiber network is required to have a broader bandwidth and a larger capacity, and more and more optical fibers need to be connected in an optical access network. Correspondingly, hardware devices need to accommodate more and more optical fiber connections, as a result, the optical fiber connectors need to be increasingly densely installed and have a smaller volume. Particularly, the transverse size of the interfacing end surface of the optical fiber connector needs to be reduced as much as possible, so as to increase the installation density of the optical fiber connectors without any changes to the physical volume of the existing devices. However, the aforesaid structures of the conventional optical fiber connectors and the assembling processes thereof fail to meet these needs.

### Summary of the Disclosure

The object of the disclosure is to provide an optical fiber connector suitable for high density installation and an assembling method thereof. The optical fiber connector as provided is different from the conventional optical fiber connectors in that the transverse width of its engaging surface is significantly reduced while meeting requirements for structural strength, whereby the inventive optical fiber connectors can be installed more densely.

The aforesaid object is realized by employing the following technical solutions:

According to one embodiment, a high-density optical fiber connector configured to match with an optical fiber adapter is disclosed and includes: a connector casing, a ceramic ferrule 2 configured to connect with an optical fiber, and a boot 8 connected with a tail of the connector casing, where the connector casing is provided with an elastic arm thereon configured to lock up the optical fiber adapter, and the elastic arm has a fixed end 102 oriented toward a tail of the optical fiber connector, and has a free end 103 oriented toward an insert end of the optical fiber connector and provided with a retaining bump 104. When the connector is fitted into a corresponding optical fiber adapter, the retaining bump 104 on the free end 103 forms a snap fit with the adapter. To remove the connector, the free end 103 is pressed to disengage the retaining bump 104 from the optical fiber adapter. The fixed end 102 is oriented toward the tail of the connector while the free end 103 faces toward the insert end of the connector, such that the nearby optical fiber would not be pulled while the connector is being removed, thereby avoiding erroneous operations and damages to the adjacent optical fibers. Additionally, the free end may be, for example, noosed to conveniently remove the optical fiber connector, thereby addressing the problem that densely installed optical fiber connectors is inserted and removed inconveniently.

Further, the connector casing includes a front casing 1 and a rear casing 5 which snap fit with one another to form a cavity, and is externally provided with a guide block 101 in the front to prevent reverse insertion. A rear end of the ceramic ferrule 2 is fastened with a ferrule tailstock 3 and the ceramic ferrule 2 penetrates through a through hole 106 disposed at the front of the connector casing. A spring is compressed between the ferrule tailstock 3 and a thrust block 501 formed by inner walls of the connector casing.

Particularly, an insert block 105 is provided at the bottom of the connector casing and configured to insert into a corresponding groove arranged on the optical fiber adapter, preventing the optical fiber connector from shaking in a vertical direction.

Particularly, a shield 110 corresponding to a projecting portion of the ceramic ferrule 2 is disposed in the front of the connector casing, and the shield 110 has a curved interior surface.

Preferably, the connector casing has a transverse width ranging from 2.5mm to 4.5mm.

Further, a hook 504 for clamp is provided at the side of the elastic arm to connect a plurality of elastic arms into one piece via a clamp 14.

Particularly, the rear casing 5 includes an insert portion having an inverted-U shaped cross section and including a hook 502 for front casing at each of both external sides thereof. The front casing 1 is provided with engagement recesses 107 on respective side walls to correspond to the hooks 502 for front casing, and the hook 502 for front casing and the engagement recess 107 form a snap fit when the rear casing 5 is inserted into the front casing 1.

Particularly, a positioning block 108 and a positioning slot 503 matching with each other are respectively arranged at the bottom of the front casing 1 and the bottom of the rear casing 5.

Particularly, the cavity includes a front portion and a rear portion, the front portion being narrower than the rear portion. The front portion is configured for circumferentially constraining the spring 4, while the rear portion for accommodating bending deformation of an optical fiber caused by retreat of the ferrule 2.

Particularly, the rear casing 5 is fixed, at the tail, with a tail pipe 6 in communication with the cavity. The tail pipe 6 has an annular groove 601 and is enveloped by a metal pipe 7 that is deformable due to compression.

Particularly, the boot 8 is fixedly connected with the connector casing via the tail pipe 6 and an anti-spin insert 12.

Further, a through hole 109 is provided in the connector casing and configured to receive a rod-shaped connecting member configured to combine a plurality of the high-density optical fiber connectors into one piece.

Further, a through slot 505 is provided in the connector casing and configured to receive a sheet-shaped connecting member configured to combine a plurality of the high-density optical fiber connectors into one piece.

Preferably, the rod-shaped connecting member is a joint pin 15, which is in an interference fit with the through hole 109.

Preferably, the sheet-shaped connecting member is a combined anti-spin insert 16, which connects a plurality of the connector casings and the boot 8 simultaneously.

Preferably, the sheet-shaped connecting member is a combined plate 17, which simultaneously connects a plurality of the connector casings.

The present disclosure also provides a method for assembling a single-core high-density optical fiber connector, including steps of:
1) fitting an end of a ceramic ferrule 2 into to a ferrule tailstock 3;
2) removing a coating (11) of an optical fiber at an insert end of the optical fiber but maintaining a tight buffer layer 10 and an aramid yarn layer 13 of a suitable length, and exposing an optical fiber core 9 of a suitable length;
3) passing the insert end of the optical fiber sequentially through a boot 8, a metal pipe 7, a tail pipe 6, a rear casing 5 and a spring 4; cleaning the optical fiber core 9 to remove a coating layer; and inserting the optical fiber core 9 through the ferrule tailstock 3 into a through hole of the ferrule 2 where adhesive is applied;
4) heating the adhesive applied in the ceramic ferrule 2 beforehand to solidify the adhesive so that the optical fiber is fixed to the ceramic ferrule 2;
5) fitting the ceramic ferrule 2 along with the ferrule tailstock 3 into the front casing 1 after the adhesive is solidified, such that the ceramic ferrule 2 projects from a through hole 106 at the front end of the front casing 1; mounting a spring 4; and inserting the rear casing 5 into the front casing 1 to form a snap fit;
6) sheathing the tail pipe 6 with the aramid yarn layer 13 and then sheathing the aramid yarn layer 13 with the metal pipe 7, and compressing and deforming the metal pipe 7 to form a fixed connection; and
7) mounting an anti-spin insert 12 into the rear casing 5, and inserting the anti-spin insert 12 and the metal pipe 7 into the boot 8 to complete the assembly of the connector.

Further, the step 7) further includes: gluing the coating 11 of the optical fiber to the boot 8.

Further, the step 3) further includes: directing an insert end of the optical fiber through a heat-shrinkable sleeve prior to the metal pipe 7, and accordingly, the method further includes: after the step 6), surrounding the metal pipe 7 and the fiber coating 11 with the heat-shrinkable sleeve and heating the heat-shrinkable sleeve to fix the heat-shrinkable sleeve.

The present disclosure further discloses a method for assembling a multi-core high-density optical fiber connector, comprising:
1) arranging a plurality of assembled single-core optical fiber connectors closely in parallel, and directing a rod-shaped connecting member sequentially through a through hole 109 of each connector;
2) embedding a sheet-shaped connecting member into a through slot 505 of each connector; and
3) snapping a clamp 14 onto hooks 504 for clamp disposed on the lateral sides of the outermost single-core optical fiber connectors to combine a plurality of elastic arms into one piece.

The high-density optical fiber connector as proposed in the present disclosure has a significantly reduced overall dimension while meeting requirements for structural strength and functions, specifically, its engaging surface is reduced to have a transverse width between 2.5mm and 4.5mm. Thereby, the inventive optical fiber connectors can be installed much more densely.

### Brief Description of the Drawing

The present disclosure will be further described in detail below with reference to the accompanying drawings and embodiments.
FIG. 1 is a schematic diagram of the assembled structure of a single-core optical fiber connector for high-density installation according to an embodiment of the present disclosure;
FIG. 2 is an exploded view of the optical fiber connector of FIG. 1;
FIG. 3 is an exploded view of the single-core optical fiber connector for high-density installation according to the embodiment of the present disclosure;
FIG. 4 is a schematic diagram showing the structure of a rear casing of the single-core optical fiber connector for high-density installation according to the embodiment of the present disclosure;
FIG. 5 is a schematic diagram showing the structure of the assembly of the rear casing of the single-core optical fiber connector for high-density installation according to the embodiment of the present disclosure with a boot;
FIG. 6 is a schematic diagram showing the structure of an anti-spin insert according to the embodiment of the present disclosure;
FIG. 7 is a schematic diagram showing the structure of a front casing of the optical fiber connector for high-density installation according to the embodiment of the present disclosure;
FIG. 8 is a section view showing the structure of the front casing of the optical fiber connector for high-density installation according to the embodiment of the present disclosure;
FIG. 9 is a schematic diagram showing the structure of a dual-optical fiber connector structure according to an embodiment of the present disclosure;
FIG. 10 is an exploded view of the dual-optical fiber connector structure according to the embodiment of the present disclosure;
FIG. 11 is a schematic diagram showing the structure of a clamp according to the embodiment of the present disclosure;
FIG. 12 is a schematic diagram showing the structure of a tail through slot of the optical fiber connector for high-density installation according to the embodiment of the present disclosure; and
FIG. 13 is a schematic diagram showing the structure of a combined connecting plate according to the embodiment of the present disclosure.

In the drawings:

| | | | | | |
|---|---|---|---|---|---|
| 1: | front casing; | 2: | ceramic ferrule; | 3: | ferrule tailstock; |
| 4: | spring: 5: rear casing; | 6: | tail pipe; | 7: | metal pipe; 8: boot; |
| 9: | optical fiber core; | 10: | tight buffer layer; | 11: | fiber coating; |
| 12: | anti-spin insert; | 13: | aramid yarn layer; | 14: | clamp; 15: joint pin; |
| 16: | combined anti-spin insert; | 17: | combined connecting plate; | | |
| 101: | guide block; | 102: | fixed end; | 103: | free end; |
| 104: | retaining bump; | 105: | insert block; | 106: | through hole; |
| 107: | engagement recess; | 108: | positioning block; | 109: | through hole; |
| 110: | shield; | 501: | thrust block; | 502: | hook for front casing; |
| 503: | positioning slot; | 504: | hook for clamp; | 505: | through slot; |
| 506: | positioning block; | 121: | notch; | 122: | retaining protrusion; |
| 141: | base plate; | 142: | lug; | 143: | engagement recess |

### Detailed Description of the Disclosure

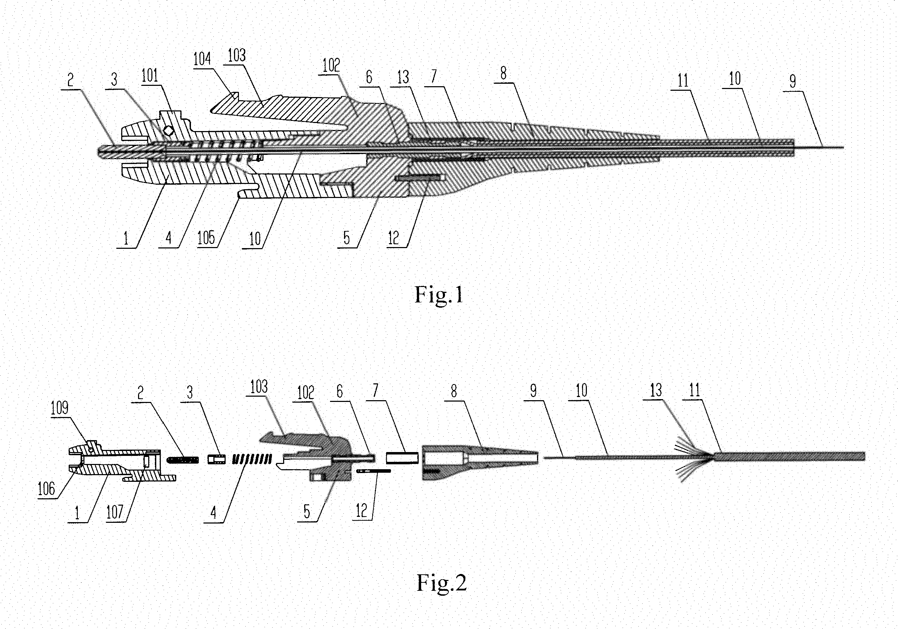

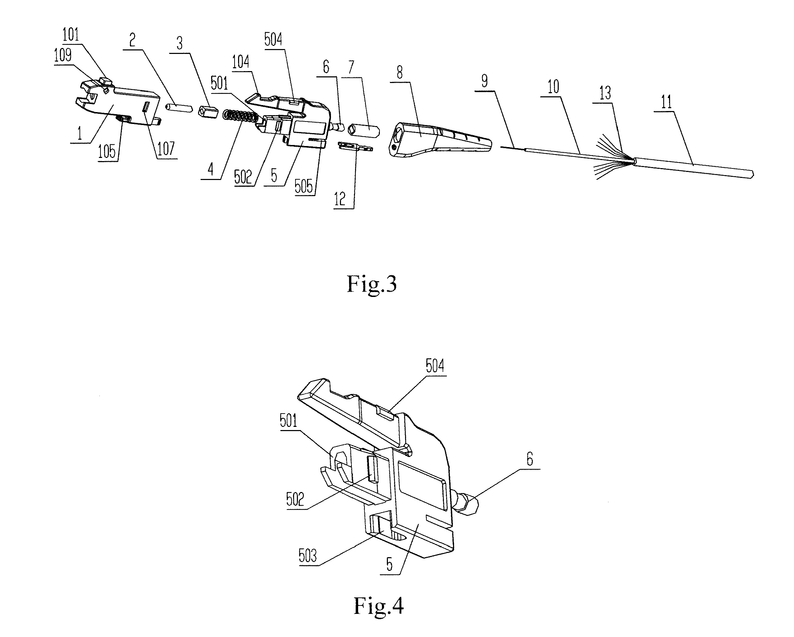

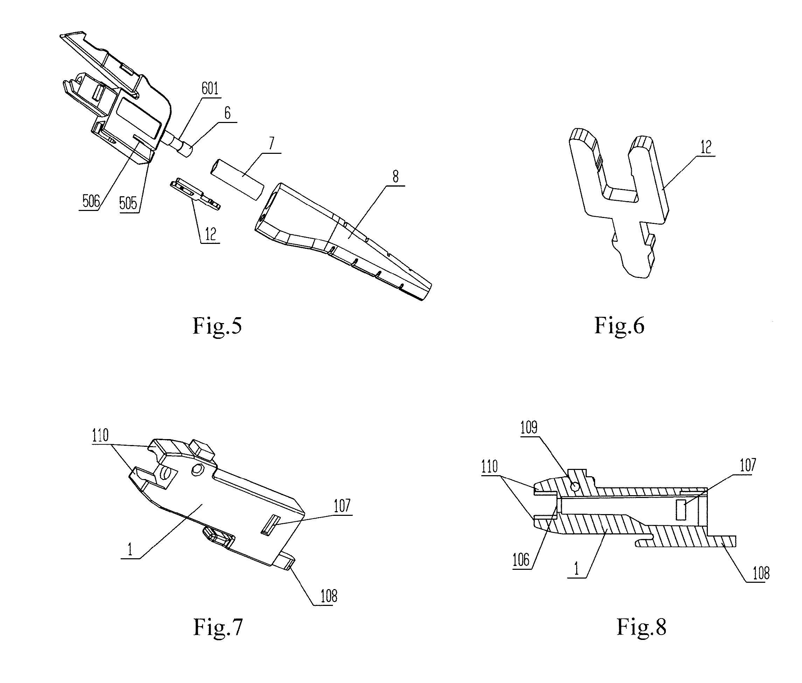

FIGs. 1 to 8 illustrate a high-density optical fiber connector according to a particular embodiment of the present disclosure. The connector includes a connector casing, which includes a front casing 1 and a rear casing 5 which engages with the front casing. The rear casing 5 includes an insert portion, which has an inverted-U shaped cross section. A hook 502 for front casing is formed on each of two external sides of the inverted-U shaped structure of the insert portion. Correspondingly, the front casing 1 is provided with an engagement recess 107 on each of its two lateral side walls. When the rear casing 5 is inserted into the front casing 1, the hooks 502 for front casing extend through the engagement recesses 107 to form a snap fit. The inverted-U shaped structure is designed such that on the one hand, the hooks 502 for front casing on both external sides may be pressed towards each other during the insertion, and on the other hand, an elastic force is provided to enable the hooks 502 for front casing to extend through the engagement recesses 107 to form the snap fit when reaching the engagement recesses 107. A through hole 106 is arranged at the front of the front casing 1. The front casing 1 and the rear casing 5 are snap fitted with each other to define a cavity, which includes a front portion and a rear portion, with the front portion being narrower than the rear portion. The front portion of the cavity is used to accommodate a ceramic ferrule 2, a ferrule tailstock 3, and a spring 4, and circumferentially constrain the spring 4. The ceramic ferrule 2 has its tail fixed to the ferrule tailstock 3 and penetrates through the through hole 106 at the front of the connector casing. The spring 4 is compressed between the ferrule tailstock 3 and the front end of the inverted-U shaped structure of the rear casing 5. The front end of the inverted-U shaped structure serves as a thrust block 501, while the ceramic ferrule 2 and the ferrule tailstock 3 serve as a moving end. When optical fiber connectors are inserted into the front and rear ends of an adapter, the ferrules 2 of the optical fiber connectors abut on each other within the adapter, and the spring 4 applies an elastic force onto the corresponding ceramic ferrule 2. The larger rear portion of the cavity is used to accommodate the bending deformation of the optical fiber within the cavity caused by retreat of the ceramic ferrule 2. Consequently, when an optical fiber connector is inserted into an adapter, the case where the optical fiber is broken or damaged because insufficient space in the cavity cannot accommodate the deformed optical fiber caused by the retreated ferrule 2 is avoided.

An insert block 105, which is arranged at the bottom of the connector casing, may be inserted into a corresponding groove arranged at the optical fiber adapter to prevent the optical fiber connector from shaking in the vertical direction.

To compensate for the reduced thickness of the connector casing, a positioning block 108 and a positioning slot 503 matching therewith are respectively arranged at the bottom of the front casing 1 and the bottom of the rear casing 5 in order to strengthen the snap fit between the front casing and the rear casing, so that a tenon structure is formed after the snap fit is formed, to enhance the connection between the front casing 1 and the rear casing 5.

To protect the portion of the ceramic ferrule 2 that projects from the connector casing, a shield 110 corresponding to the projecting portion of the ferrule 2 is disposed at the front end of the connector casing. The shield 110 has a curved interior surface such that the two sides of the shield 110 have a relatively large thickness, thereby ensuring a strong connection between the shield 110 and the front casing 1.

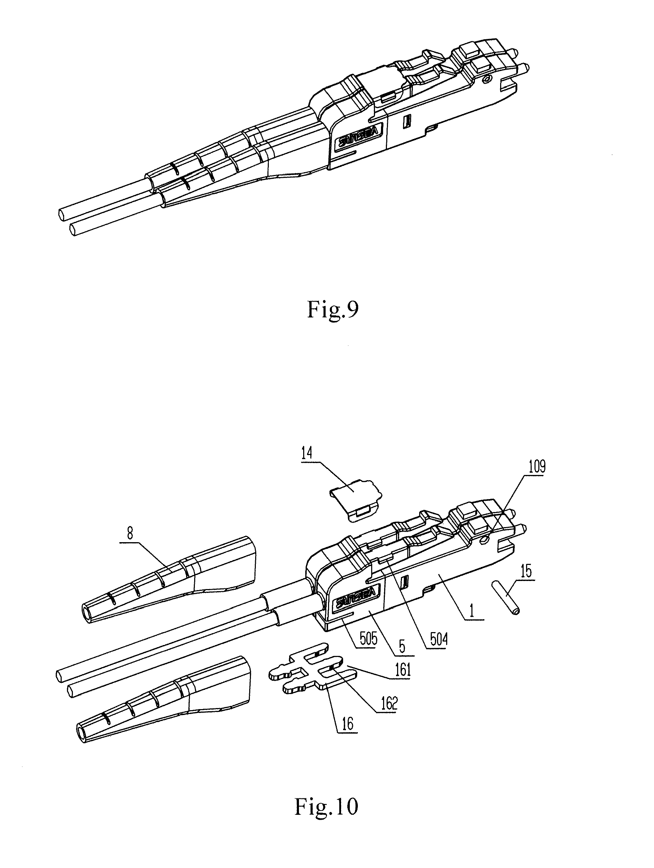

On the connector casing, a guide block 101 and an elastic arm are successively arranged from the front toward the back. The guide block 101 not only guides the insertion of the connector into an adapter module, but also functions to prevent inverse insertion so as to ensure the optical fiber connector to be properly inserted. The elastic arm provided on the connector housing is intended to lock up an optical fiber adapter. A fixed end 102 of the elastic arm is oriented toward the tail of the connector, while a free end 103 of the elastic arm is oriented toward an insert end of the connector and includes, at the very end of the elastic arm, a retaining bump 104 having a slanted surface. The retaining bump 104 is arranged such that when the optical fiber connector is inserted into a predesigned position of the adapter, the retaining bump 104 pops out into a corresponding groove of the adapter to lock up the adapter under the elasticity of the elastic arm itself. To remove the optical fiber connector, the elastic arm is pressed down so that the retaining bump 104 disengages from the groove of the adapter, and then the optical fiber connector is automatically removed from the receptacle of the adapter under the elasticity of the elastic arm in combination with the slanted surface. The fixed end 102 of the elastic arm is arranged on the rear casing 5, while the free end 103 thereof is oriented toward the insert end of the connector, such that the nearby optical fiber would not be pulled by the elastic arm while the optical fiber connector is being removed from the receptacle of the adapter, thereby avoiding erroneous operations and damages to the adjacent optical fibers. Additionally, the free end may be, for example, noosed to conveniently remove the optical fiber connector, thereby addressing the problem in the art that densely installed optical fiber connectors can hardly be inserted and removed. The side of the elastic arm is provided with a hook 504 for clamp. When a plurality of optical fiber connectors are used in parallel to form, for example, a dual-optical fiber connector structure as shown in FIGs. 9-12, a clamp 14 may be used to combine the plurality of elastic arms into one piece. Preferably, the clamp 14 is formed by a stamped elastic metal sheet. The clamp 14 includes a base plate 141 made of an elastic material, and two lugs 142 formed by the bent two ends of the base plate 141. The two lugs 142 are provided with engagement recesses 143 to engage with the hooks 504 for clamp, respectively. The hooks 504 for clamp may extend through the engagement recesses 143 to form a snap fit, which makes it possible to move the elastic arms of two or more optical fiber connectors simultaneously, thereby reducing the difficulty in operations.

The rear casing 5 is fixedly connected, at the tail, with a tail pipe 6 which is in communication with the cavity. The tail pipe 6 is typically made of metal and is formed integrally with the rear casing 5 by an injection molding process. The tail pipe 6 comprises an annular groove 601, and is enveloped by a metal pipe 7 which is deformable due to compression. While assembling, an aramid yarn layer 13 of the optical fiber is interposed between the tail pipe 6 and the metal pipe 7, then the metal pipe 7 is pressed with a tool and deformed at the annular groove 601 to securely fix the optical fiber to the connector.

To protect the optical fiber, a boot 8 is disposed at the tail of the connector casing, and is fixedly connected with the connector casing by the tail pipe 6 and an anti-spin insert 12. The anti-spin insert 12 has one end inserted into the connector casing and the other end into the corresponding hole in the boot 8, so as to prevent the boot 8 from rotating around the tail pipe 6 and strengthen the connection between the boot 8 and the connector casing.

A through hole 106, or a through slot 505 or a combination thereof may be arranged on the connector casing to, along with a rod-shaped connecting member or a sheet-shaped connecting member, combine a plurality of optical fiber connectors. A dual-optical fiber connector structure as shown in FIGs. 9 to 12 is preferred. In this structure, two optical fiber connectors are fixedly connected by the combination of a rod-shaped connecting member 15 and a combined anti-spin insert 16. The rod-shaped connecting member 15 is in an interference fit with the through hole 109 at the front of the connector casing. The length of the rod-shaped connecting member 15 is equal to or slightly smaller than the sum of thicknesses of the casings of these two optical fiber connector. The rod-shaped connecting member 15, which can be knocked into the through hole 109 by a tool, is preferably made of metal such as an aluminium alloy or steel to ensure its excellent connection strength. It should be understood that the cross-section of the rod-shaped connecting member 15 is not limited to be circular, but may be rectangular or polygonal instead. Accordingly, the cross-section of the through hole 109 needs to be rectangle or polygonal as well. A plurality of (e.g. two or more) the rod-shaped connecting members may also be provided to achieve higher connection strength, and correspondingly a plurality of the through holes 109 need to be provided at each of the optical fiber connectors.

According to this embodiment, the rear end of the casing of the optical fiber connector is provided with a through slot 505 into which a combined anti-spin insert 16 is inserted as a sheet-shaped connecting member to connect two optical fiber connectors together. Meanwhile, the combined anti-spin insert 16 is also connected with two boots 8. The combined anti-spin insert 16 is in an interference fit with the through slots 505. The combined anti-spin insert 16 has a transverse width equal to or slightly smaller than the sum of thicknesses of the two optical fiber connectors. Further, to strengthen the cooperation between the combined anti-spin insert 16 and the through slots 505, a positioning block 506 is arranged within the through slot 505, and a notch 161 matching with the positioning block 506 is arranged at the corresponding position of the combined anti-spin insert 16. The positioning block 506 may be stuck in the notch 161 to effectively prevent the combined anti-spin insert 16 from being released from the through slots 505. Furthermore, a retaining protrusion 162 may be arranged at an inner side of the notch 161. With the retaining protrusion 162 resting against both sides of the positioning block 506, the combined anti-spin insert 16 is less likely to be disengaged from the through slots 505 in use.

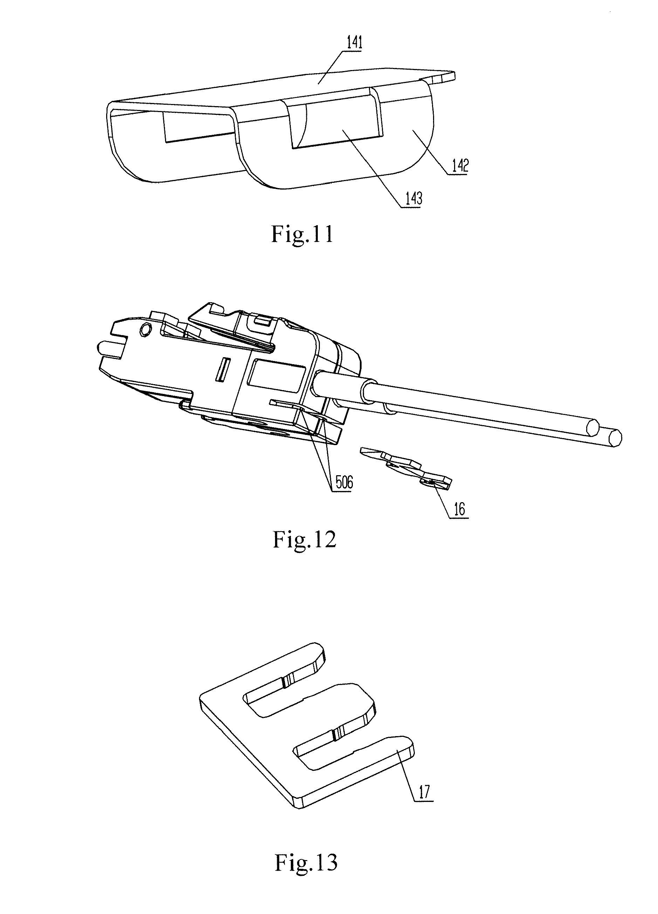

FIG. 13 shows a combined connecting plate 17 suitable for replacing the above combined anti-spin insert 16. The combined connecting plate 17 is not intended to be connected with the boot 8, but functions to connect the connector casings as a sheet-shaped connecting member.

It should be understood that a multi-optical fiber connector structure may be formed using independently either a combination of a rod-shaped connecting member and a through hole, or a combination of a sheet-shaped connecting member and a through slot. More than two optical fiber connectors, preferably, an even number of optical fiber connectors, may be combined.

Hereinabove is disclosed the structure of the optical fiber connector according to the present disclosure. Accordingly, also disclosed in the present disclosure is a method for assembling a single-core optical fiber connector, which comprises:
1. fitting an end of a ceramic ferrule 2 into to a ferrule tailstock 3;
2. removing a coating 11 of an optical fiber at an insert end of the optical fiber but maintaining a tight buffer layer 10 and an aramid yarn layer 13 of a suitable length, and exposing an optical fiber core 9 of a suitable length;
3. passing the insert end of the optical fiber sequentially through a boot 8, a metal pipe 7, a tail pipe 6, a rear casing 5 and a spring 4; cleaning the optical fiber core 9 to remove a coating layer; and inserting the optical fiber core 9 through the ferrule tailstock 3 into a through hole of the ceramic ferrule 2 where adhesive is applied;
4. heating the adhesive applied in the ceramic ferrule 2 beforehand to solidify the adhesive so that the optical fiber is fixedly connected with the ceramic ferrule 2;
5. fitting the ceramic ferrule 2 along with the ferrule tailstock 3 into the front casing 1 after the adhesive is solidified, such that the ceramic ferrule 2 projects from the through hole 106 at the front end of the front casing 1, then inserting the spring 4 into the front casing 1; and inserting the rear casing 5 into the front casing 1 to form a snap fit;
6. sheathing the tail pipe 6 with the aramid yarn layer 13 and then sheathing the aramid yarn layer 13 with the metal pipe 7, and compressing and deforming the metal pipe 7 to form a fixed connection; and
7. mounting a connector plate 12 into the rear casing 5, and inserting the connector plate 12 and the metal pipe 7 into the boot 8 to complete the assembly of the connector.

If the connector casing is of a relatively small thickness, the optical fiber coating 11 may be glued to the boot 8 in the aforesaid Step 7.

If the connector casing has a relatively large transverse width and hence the boot 8 has a sufficient thickness, a heat-shrinkable sleeve may also be arranged surrounding the metal pipe 7 and the coating 11 of the optical fiber to enhance the fixation. Accordingly, in Step 3, the insert end of the optical fiber is guided through the heat-shrinkable sleeve and then through the metal pipe (7). Besides, after Step 6, the heat-shrinkable sleeve surrounds the metal pipe 7 and the coating 11 of the optical fiber before being heated and secured.

Accordingly, the method for assembling a multi-core optical fiber connector additionally comprises:
1. arranging a plurality of assembled single-core optical fiber connectors closely in parallel, and directing a rod-shaped connecting member sequentially through a through hole 109 of each connector;
2. embedding a sheet-shaped connecting member into a through slot 505 of each connector; and
3. snapping a clamp 14 onto hooks 504 for clamp disposed on the lateral sides of the outermost single-core fiber connectors to combine a plurality of elastic arms into one piece.

The casing of the single-core optical fiber connector provided in the present disclosure may have a reduced transverse width between 2.5mm and 4.5mm, which is much smaller as compared with the existing connectors, thereby greatly increasing the installation density of the optical fiber connectors.

The present disclosure is hereinabove described in detail with respect to the foresaid embodiments, but these embodiments should not be construed to limit the scope of the present disclosure. Any equivalent implementations or modifications made within the spirit of the present disclosure should be considered to fall within the scope of the present disclosure.

## Claims

1. A high-density optical fiber connector, configured to match with an optical fiber adapter, comprising: a connector casing, a ceramic ferrule (2) configured to connect with an optical fiber, and a boot (8) connected with a tail of the connector casing,
wherein the connector casing is provided with an elastic arm configured to lock up the optical fiber adapter, and the elastic arm has a fixed end (102) oriented toward a tail of the optical fiber connector, and has a free end (103) oriented toward an insert end of the optical fiber connector and provided with a retaining bump (104).

2. The high-density optical fiber connector of claim 1, wherein the connector casing comprises a front casing (1) and a rear casing (5) which snap fit with one another to form a cavity, and is externally provided with a guide block (101) in the front to prevent reverse insertion; wherein a rear end of the ceramic ferrule (2) is fastened with a ferrule tailstock (3) and the ceramic ferrule (2) penetrates through a through hole (106) disposed at the front of the connector casing; and wherein a spring is compressed between the ferrule tailstock (3) and a thrust block (501) formed by inner walls of the connector casing.

3. The high-density optical fiber connector of claim 1, wherein an insert block (105) is provided at the bottom of the connector casing and configured to insert into a corresponding groove arranged on the optical fiber adapter, preventing the optical fiber connector from shaking in a vertical direction.

4. The high-density optical fiber connector of claim 1, wherein a shield (110) corresponding to a portion of the ceramic ferrule (2) that projects from the connector casing is disposed in the front of the connector casing, and the shield (110) has a curved interior surface.

5. The high-density optical fiber connector of claim 1, wherein the connector casing has a transverse width ranging from 2.5mm to 4.5mm.

6. The high-density optical fiber connector of claim 1, wherein a hook (504) for clamp is provided at the side of the elastic arm to connect a plurality of elastic arms into one piece via a clamp (14).

7. The high-density optical fiber connector of claim 2, wherein the rear casing (5) comprises an insert portion having an inverted-U shaped cross section and including a hook (502) for front casing at each of both external sides thereof, and wherein the front casing (1) is provided with engagement recesses (107) on respective side walls to correspond to the hooks (502) for front casing, the hook (502) for front casing and the engagement recess (107) forming a snap fit when the rear casing (5) is inserted into the front casing (1).

8. The high-density optical fiber connector of claim 2, wherein a positioning block (108) and a positioning slot (503) matching with each other are respectively arranged at the bottom of the front casing (1) and the bottom of the rear casing (5).

9. The high-density optical fiber connector of claim 2, wherein the cavity comprises a front portion and a rear portion, the front portion being narrower than the rear portion, the front portion circumferentially constraining the spring (4), while the rear portion accommodating bending deformation of an optical fiber caused by retreat of the ceramic ferrule (2).

10. The high-density optical fiber connector of claim 2, wherein the rear casing (5) is fixed, at the tail, with a tail pipe (6) in communication with the cavity, the tail pipe (6) having an annular groove (601) and enveloped by a metal pipe (7) that is deformable due to compression.

11. The high-density optical fiber connector of claim 10, wherein the boot (8) is fixedly connected with the connector casing via the tail pipe (6) and an anti-spin insert (12).

12. The high-density optical fiber connector of any one of claims 1-11, wherein a through hole (109) is provided in the connector casing and configured to receive a rod-shaped connecting member configured to combine a plurality of the high-density optical fiber connectors into one piece.

13. The high-density optical fiber connector of any one of claims 1-11, wherein a through slot (505) is provided in the connector casing and configured to receive a sheet-shaped connecting member configured to combine a plurality of the high-density optical fiber connectors into one piece.

14. The high-density optical fiber connector of claim 12, wherein the rod-shaped connecting member includes a joint pin (15), which is in an interference fit with the through hole (109).

15. The high-density optical fiber connector of claim 13, wherein the sheet-shaped connecting member is a combined anti-spin insert (16), which connects a plurality of the connector casings and the boot (8) simultaneously.

16. The high-density optical fiber connector of claim 13, wherein the sheet-shaped connecting member is a combined plate (17), which simultaneously connects a plurality of the connector casings.

17. A method for assembling a single-core high-density optical fiber connector, comprising steps of:
1) fitting an end of a ceramic ferrule (2) into to a ferrule tailstock (3);
2) removing a coating (11) of an optical fiber at an insert end of the optical fiber but maintaining a tight buffer layer (10) and an aramid yarn layer (13) of a suitable length, and exposing an optical fiber core (9) of a suitable length;
3) passing the insert end of the optical fiber sequentially through a boot (8), a metal pipe (7), a tail pipe (6), a rear casing (5) and a spring (4); cleaning the optical fiber core (9) to remove a coating layer; and inserting the optical fiber core (9) through the ferrule tailstock (3) into a through hole of the ceramic ferrule (2) where adhesive is applied;
4) heating the adhesive applied in the ceramic ferrule 2 beforehand to solidify the adhesive so that the optical fiber is fixed to the ceramic ferrule (2);
5) fitting the ceramic ferrule (2) along with the ferrule tailstock (3) into the front casing (1) after the adhesive is solidified, such that the ceramic ferrule (2) projects from a through hole (106) at the front end of the front casing (1); and inserting the rear casing (5) into the front casing (1) to form a snap fit;
6) sheathing the tail pipe (6) with the aramid yarn layer (13) and then sheathing the aramid yarn layer (13) with the metal pipe (7), and compressing and deforming the metal pipe (7) to form a fixed connection; and
7) mounting an anti-spin insert (12) into the rear casing (5), and inserting the anti-spin insert (12) and the metal pipe (7) into the boot (8) to complete the assembly of the connector.

18. The method of claim 17, wherein the step 7) further comprises:
gluing the coating (11) of the optical fiber to the boot (8).

19. The method of claim 17, wherein a heat-shrinkable sleeve is provided to enhance the strength of the fiber, and accordingly the step 3) further comprises: directing the insert end of the optical fiber through the heat-shrinkable sleeve prior to the metal pipe (7); and wherein the method further comprises: after the step 6), surrounding the metal pipe (7) and the fiber coating (11) with the heat-shrinkable sleeve and heating the heat-shrinkable sleeve to fix the heat-shrinkable sleeve.

20. A method for assembling a multi-core high-density optical fiber connector, comprising:
1) arranging a plurality of assembled single-core optical fiber connectors closely in parallel, and directing a rod-shaped connecting member sequentially through a through hole (109) of each connector;
2) embedding a sheet-shaped connecting member into a through slot (505) of each connector; and
3) snapping a clamp (14) onto hooks (504) for clamp disposed on the lateral sides of the outermost single-core optical fiber connectors to combine a plurality of elastic arms into one piece.
